# EUROPEAN PATENT SPECIFICATION

(11) **EP 2 161 958 B1**
(45) Date of publication and mention of the grant of the patent: **28.12.2011**
(21) Application number: 09169746.6
(22) Date of filing: 08.09.2009
(51) Int. Cl.: H04W 28/18, H04W 72/04

(54) **Method for voice channel type assignment in UTRAN networks**
Verfahren zur Sprachkanaltyp-Zuweisung in UTRAN-Netzwerken
Procédé pour l' affectation de type de canal de voix dans des réseaux UTRAN

(30) Priority: 08.09.2008 ES 200802570
(43) Date of publication of application: 10.03.2010
(73) Proprietor: Vodafone Group PLC, Newbury Berkshire RG14 2FN (GB); Vodafone España, S.A., 28108 Alcobendas (ES)
(72) Inventor: Dominguez Romero, Francisco, 28050, Madrid (ES); Urbano Ruiz, Julio, 28050, Madrid (ES); Diaz Mateos, Maria, 28050, Madrid (ES)
(74) Representative: Keston, David Arthur

(56) References cited:
- EP-A2- 1 422 887
- R.Ferrus, J.Olmos, O.Sallent, J. Perez-Romero, F. Casadevall: "A resource management framework for IP based radio access networks" First Ambient Networks Workshop on Mobility Multiaccess and Network Management 2007 2007, pages 55-60, XP002559758 Retrieved from the Internet: URL:http://www.aroma-ist.upc.edu/publicdoc uments/workshops/W11.pdf> [retrieved on 2009-12-09]
- A.Alexiou, C.Bouras, V.Kokkinos, E. Rekkas: "Power efficient radio bearer selection in MBMS multicast mode" MSWiM 2007 22 October 2007 (2007-10-22), pages 261-268, XP002559759 Chaneia, Crete Island, Greece Retrieved from the Internet: URL:http://delivery.acm.org/10.1145/130000 0/1298172/p261-alexiou.pdf?key1=1298172&ke y2=4092540621&coll=GUIDE&dl=GUIDE&CFID=659 69724&CFTOKEN=60216927> [retrieved on 2009-12-09]

## Description

### Field of the invention

The present invention lies in the field of mobile communications, and more specifically in providing a method for establishing voice calls in the most efficient way from the network point of view, according to the future technologies, such as voice over HSPA, in the 3G networks.

### Background of the invention

Currently, voice is implemented in all 3G networks over Dedicated Channel (DCH) in Radio Part and MSC (Mobile Switching Centre) in Core Network area, so internal network algorithms don't need to distinguish between different voice call possibilities.

In coming years, new possibilities are coming for Circuit Switch (CS) voice, the options will be:
- Voice over DCH (Using Release 99 Radio and CS Core MSC). This is the current option, in which the voice is transported with the standard AMR (Adaptive Multi-rate) codec over a dedicated channel DCH (that is a channel defined in the Release 99 of the 3GPP specifications).
- Voice over HSPA (using High Speed Packet Access, HSPA Radio and CS Core MSC). This is a new possibility defined in the 3GPP Release 7 of the standards. It consists of mapping the AMR codec over an HSPA channel. The HSPA is composed of HSDPA in downlink (a shared channel) and HSUPA in uplink (new enhanced DCH channel), therefore more efficient in terms of the radio interface.

In this situation, it is needed a RNC (Radio Network Controller) method for voice assignment to allocate to the users the voice carrier option more convenient for the operator.

In case of power or codes congestion of the radio interface, or in case of DCH baseband resources congestion, it is preferred to use HSPA to carry the voice traffic. But in case the HSPA baseband resources are congested, it is better to transport the voice over DCH.

This internal RNC method provides the opportunity to establish voice calls in the most efficient way from the network point of view, and provides also the possibility to change between the options depending on radio conditions, assuring an efficient use of the network and being transparent for the user.

EP1422887 describes a method for varying the allocation of base station resources whereby transmit power is initially allocated to dedicated voice channels on the one hand and HSDPA services on the other in accordance with a predetermined allocation and, when the demand for these services alters significantly relative to one another, reallocates that transmit power to according to usage information.

In a paper submitted for the First Ambient Networks Workshop on Mobility, Multiaccess and Network Management (M2NM 2007) - R. Ferrus et al.: "A resource management framework for IP based radio access networks", 2007 - the authors describe a resource management framework that enhances functions directed to the efficient usage of the air interface in radio access networks by further taking account of transport resource information (such as link failure/congestion). For voice service, this paper contemplates that alternatives, voice over DCH and voice over HS-DSCH (i.e. HSPA), will become available.

### Summary of the invention

The invention relates to a method for voice channel type assignment in UTRAN networks according to claim 1, said channel assignment being carried out in the RNC and a radio network controller element for voice channel type assignment according to claim 8. Preferred embodiments of the method and radio network controller element are defined in the respective dependent claims.

In the present method the RNC is previously provided with the following information for each of the Nodes B under its control:
- Nodes B resources usage, including at least:
   - Node B HSPA baseband use (*NB_HSPA_BB*)
   - Node B DCH baseband use (*NB_DCH_BB*)
   - Node B transmission power use (*TX_power*)
   - Node B code tree use (*Code*_*Tree*)
- a plurality of configurable parameters, including at least:
   - a first configurable parameter (*Voice_RAB_Default*) to indicate which CS RAB (Radio Access Bearer) voice channel type, CS over DCH or CS over HSPA will be allocated by default when there are no restrictions
   - HSPA Baseband Congestion Threshold (HSPA_BB*_{CT}*) parameter, to indicate from what level of HSPA baseband use the Node B is in congestion state.
   - DCH Baseband Congestion Threshold *(DCH_BB_{CT})* parameter, to indicate from what level of DCH baseband use the Node B is in congestion state.
   - TX Power Congestion Threshold (*TX_POWER_{CT}*) parameter, to indicate from what level of transmission power the Node B is in congestion state.
   - Codes Congestion Threshold (*CODES_{CT}*) parameter, to indicate from what level of tree codes usage the Node B is in congestion state.

The method comprises:
- analyzing the value of the first configurable parameter (*Voice_RAB_default*):
   - in case *Voice RAB Default* value corresponds to the value established for allocating CS over HSPA:
      - analyzing if the corresponding Node B HSPA baseband use *(NB_HSPA_BB)* is higher than the HSPA Baseband Congestion Threshold parameter (*HSPA_BB_{CT}*), and in that case allocating CS over DCH voice; otherwise allocating CS over HSPA voice;
   - in case *Voice RAB Default* value corresponds to the value established for allocating CS over DCH:
      - analyzing if at least one of the at least one variable indicating the usage level of the corresponding Node B (*TX_Power,* Code_Tree, *NB_DCH_BB*) is higher than the corresponding configurable parameter indicating the congestion threshold (*TX_POWER_{CT}. CODES_{CT}. DCH_BB_{CT}*), and in that case allocating CS over HSPA voice; otherwise allocating CS over DCH voice.

In other words, for each Node B, the RNC receives a plurality of node parameters corresponding to resources usage at each respective Node B. The RNC also receives a plurality of configurable network parameters. One of those configurable network parameters is a parameter indicating which voice channel type will be allocated by default. The method comprises checking the current default voice channel type and depending upon the default voice channel type, comparing a selected one of the node parameters with a corresponding one of the other configurable network parameters; and allocating voice calls either to the default voice channel type or to the alternative voice channel type in accordance with the result of the comparison step.

The method can either be applied in the call setup or in a reconfiguration process during the call (in the same cell or when doing a handover to another cell).

### Brief description of the drawings

To complete the description and in order to provide for a better understanding of the invention, a set of drawings is provided. Said drawings form an integral part of the description and illustrate preferred embodiments of the invention, which should not be interpreted as restricting the scope of the invention, but just as examples of how the invention can be embodied. The drawings comprise the following figures:
Figure 1 represents the basic call flow of a CS call.
Figure 2 shows a diagram flow of the method.

### Detailed description of the preferred embodiments

The present invention consists in an RNC method for voice assignment, where the inputs are (i) Node B real time resources status and (ii) configurable parameters; whereas the output is the assignment of the CS voice channel type to the user.

When the user equipment (UE) tries to establish a voice call, a RNC voice channel type assignment method will be executed in the RNC so that it can be decided what type of CS voice channel to allocate to the user. The method will be carried out in the RNC because the RB (Radio Bearer) is allocated between the RNC 3 and the UE 1.

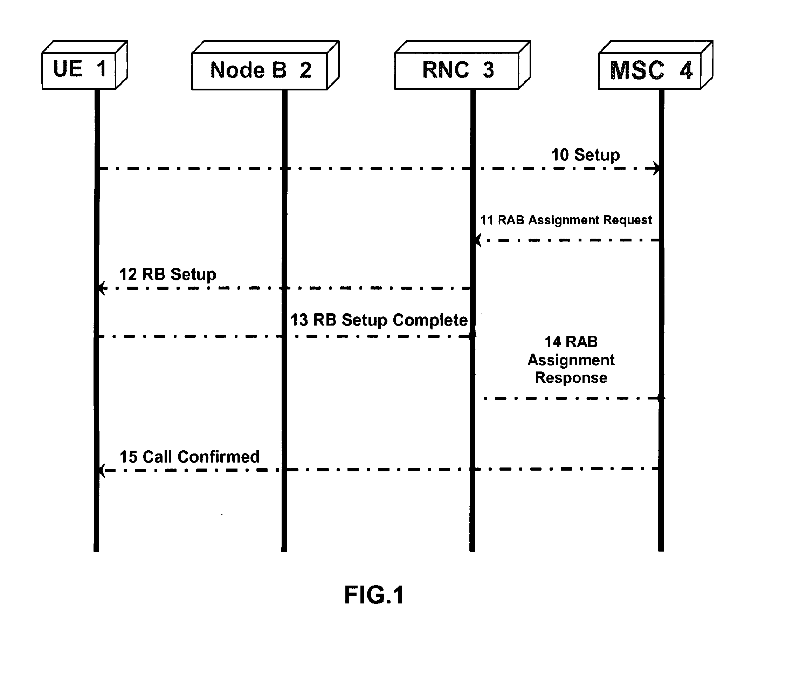

**Figure 1** illustrates the basic call flow of a CS call. The MSC 4 receives 10 the setup of the call and then sends 11 a "RAB (Radio Access Bearer) Assignment Request" to the RNC 3. Then the RNC 3 has to decide which kind of channel to allocate in the RB setup message, which sends 12 to the UE 2. The UE 1 then answers 13 to the RNC 3 with a RB Setup Complete message and the RNC 3 sends 14 a RAB Assignment Response back to the MSC 4. Then the MSC 4 confirms 15 the call to the UE 1.

As commented above, the parameters used as inputs by the present invention are the Node B real time status parameters and some configurable parameters. The RNC 3 receives the information of the transmitted power by the Node B 2, and has also information of the code tree use, and the baseband use, so the RNC voice channel type assignment method has all information in the RNC 3 in order to verify several conditions based on Node B status:
- Node B Power. The Node B Application Part (NBAP) protocol defined in standard TS25.433 allows sending this information from the Node B 2 to the RNC 3 about which percentage of the total power is being used. With the HARQ (Hybrid Automatic Repeat ReQuest) in the Node B, the HSDPA is more efficient in terms of power than the DCH.
- Node B Code Tree usage. The RNC allocates different OVSF (Orthogonal Variable Spreading Factor) codes to the different channels. Every DCH uses a dedicated code. And the HS-DSCH (High Speed Downlink Shared Channel) use a set of codes that are shared by all the users using this channel. So the HS-DSCH is more efficient in terms of codes than the DCH.
- DCH and HSPA Node B Baseband use. Some part of the hardware resources is dedicated to process the DCH channels and some other part is dedicated to process the HSPA channels. This information in percentage of the total baseband capacity used is sent to the RNC.

Regarding the configurable parameters, it will be possible for the operator to configure several parameters that are stored in the RNC 3:
- *Voice_RAB_default* to indicate what will be the CS RAB Voice channel type allocated by default when there are no restrictions.
- *HSPA-BB_{CT}* (HSPA Baseband Congestion Threshold) to indicate from what level of HSPA Node B baseband usage is in congestion state and some measurements have to be taken.
- *DCH_BB_{CT}* (DCH Baseband Congestion Threshold) to indicate from what level of DCH Node B baseband usage is in congestion state to take measurements.
- *TX POWER_{CT}* (TX Power Congestion Threshold) to indicate from what level of Transmission Power the Node B is in congestion state.
- *CODES_{CT}* (Codes Congestion Threshold) to indicate from what level of Codes Usage, the Node B is in congestion state.

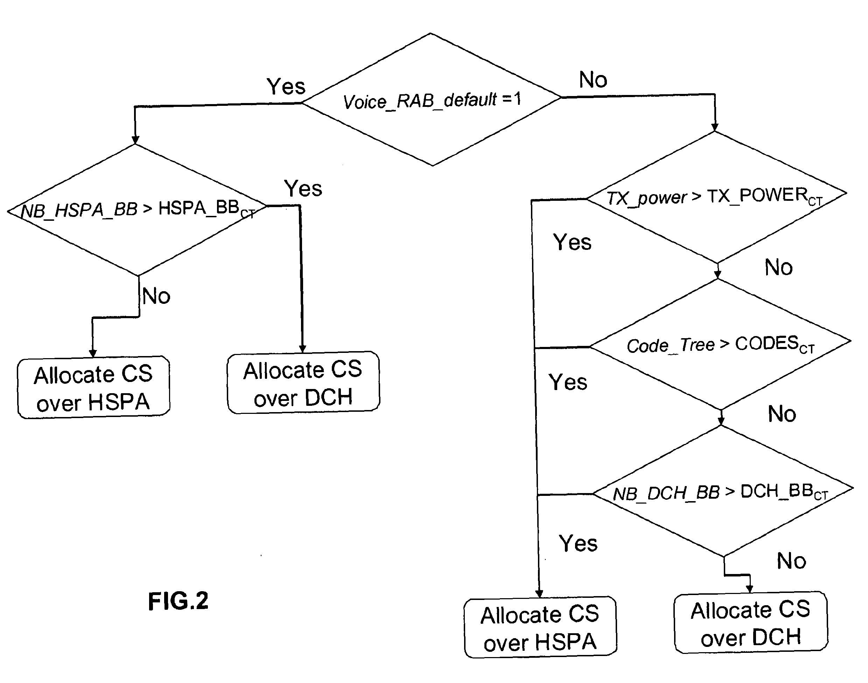

With the above data, a typical RNC voice assignment method in accordance with the invention operates as follows:
- If the parameter *Voice_RAB_default* is equal to 1, the RNC gives high priority to CS over HSPA voice, which means that by default the HSPA is used and only establishing a CS over DCH voice call when there is significant Node B HSPA baseband congestion. This same process is also explained in Figure 2 as a flow chart:
At every new voice call initiated in the RNC with *Voice_RAB_defauft=1* (in pseudocode):

```
            If Node B HSPA baseband use (NB_HSPA_BB) > HSPA Baseband
            Congestion Threshold (HSPA_BBCT) then
               Allocate CS over DCH
            Else
               Allocate CS over HSPA.
```

- If the parameter *Voice_RAB_default* is equal to 0, the RNC gives high priority to CS over DCH voice, which means that by default CS over DCH will be used and only in case there is congestion problem in power use, code tree usage or Node B DCH baseband, the CS over HSPA voice will be established.

Thus, at every new voice call initiated in the RNC, with *Voice_RAB_default=0* (in pseudocode):

```
            If Transmission Power used (TX_Power) > TX Power Congestion
            Threshold (TX_POWERCT) then
               Allocate CS over HSPA
            Else If Node B code tree used (Code_Tree) > Codes Congestion
            Threshold (CODESCT) then
               Allocate CS over HSPA
            Else If DCH part baseband use > DCH Baseband Congestion Threshold
            (DCH_BBCT) then
               Allocate CS over HSPA
            Else
               Allocate CS over DCH.
```

The same algorithm can be applied not only in the call setup but also during the call, so when there are congestion problems reconfigurations from one kind of bearer to another can be performed. For example, if there are problems with codes congestion, reconfigurations from calls over DCH to calls over HSDPA are triggered. The reconfiguration is done with the "Radio Bearer Reconfiguration" standard message (3GPP 25.331).

Moreover, when doing a handover from one cell to another where it is very congested then a reconfiguration can be done to the new cell with a change in the type of channel used.

## Claims

1. Method for voice channel type assignment in a UTRAN network having a radio network controller (3) and a plurality of Nodes B (2) under the control of said radio network controller (3) the method comprising:
at the radio network controller (3), receiving, for each of the Nodes B (2)
- a plurality of node parameters corresponding to resources usage at each respective Node B, and
- a plurality of configurable network parameters, a first of said configurable network parameters *(Voice_RAB_default)* indicating which voice channel type will be allocated by default;
**characterised in that** the method comprises, at the radio network controller (3):
- analyzing the value of the first configurable network parameter (*Voice_RAB_default*);
- depending upon the value of the first configurable network parameter, comparing a selected one of the node parameters with a corresponding one of the other configurable network parameters, said corresponding other configurable network parameter being a congestion threshold; and
- allocating voice calls to voice channel type in accordance with the result of the comparison step.

2. The method of claim 1, wherein the plurality of node parameters are selected from a group including at least:
• Node B HSPA baseband use (*NB_HSPA_BB*)
• Node B DCH baseband use (*NB_DCH_BB*)
• Node B transmission power use (*TX_power*)
• Node B code tree use (*Code_Tree*)

3. The method of claim 1 or 2, wherein the other configurable network parameters are selected from a group including at least:
• HSPA Baseband Congestion Threshold (HSPA-BB_{CT}) parameter, to indicate from what level of HSPA baseband use the Node B is in congestion state;
• DCH Baseband Congestion Threshold (DCH_BB_{CT}) parameter, to indicate from what level of DCH baseband use the Node B is in congestion state;
• TX Power Congestion Threshold (TX_POWER_{CT}) parameter, to indicate from what level of transmission power the Node B is in congestion state;
• Codes Congestion Threshold (CODES_{CT}) parameter, to indicate from what level of tree codes usage the Node B is in congestion state.

4. The method of any one of claims 1 to 3, wherein the value of the first configurable network parameter (Voice_RAB_default) corresponds to the value established for allocating voice channel type CS RAB over HSPA,
wherein the node parameters include Node B HSPA baseband use (NB_HSPA_BB),
wherein the configurable network parameters include HSPA Baseband Congestion Threshold parameter (*HSPA_BB_{CT}*),
wherein the comparison step comprises analyzing whether the Node B HSPA baseband use (*NB_HSPA_BB*) is higher than the HSPA Baseband Congestion Threshold parameter (*HSPA_BB_{CT}*), and
wherein the allocation step comprises allocating CS over DCH voice only when Node B HSPA baseband use (*NB_HSPA_BB*) is determined to be higher than the HSPA Baseband Congestion Threshold parameter (*HSPA_BB_{CT}*).

5. The method of any one of claims 1 to 3, wherein the value of the first configurable network parameter (Voice_RAB_default) corresponds to the value established for allocating voice channel type CS over DCH,
wherein the node parameters include at least one of: Node B DCH baseband use (NB_DCH_BB); Node B transmission power use (TX_power); and Node B code tree use (Code_Tree),
wherein the configurable network parameters include at least one of: DCH Baseband Congestion Threshold (DCH_BB*_{CT}*) parameter, TX Power Congestion Threshold (TX_POWER*_{CT}*) parameter, and Codes Congestion Threshold (CODES*_{CT}*) parameter, each network parameter corresponding to a respective node parameter,
wherein the comparison step comprises analyzing whether at least one of the node parameters (TX_Power, Code_Tree, NB_DCH_BB) is higher than the corresponding configurable network parameter (TX_POWER*_{CT}*, CODES*_{CT},* DCH_BB*_{CT}*), and
wherein the allocation step comprises allocating CS over HSPA voice only when at least one of the node parameters (TX_Power, Code_Tree, NB_DCH_BB) is determined to be higher than the corresponding configurable network parameter (TX_POWER*_{CT}*, CODES*_{CT}*, DCH_BB*_{CT}*).

6. The method of any preceding claim, **characterized in that** the method is applied in the call setup.

7. The method of any preceding claim, **characterized in that** the method is applied in a reconfiguration process during the call.

8. A radio network controller element for voice channel type assignment in a UTRAN network having a radio network controller (3) and a plurality of Nodes B (2) under the control of said radio network controller (3), the element comprising:
a receiver for receiving, from each of the Nodes B (2), signals indicative of:
- a plurality of node parameters corresponding to resources usage at each respective Node B, and
- a plurality of configurable network parameters, a first of said configurable network parameters (*Voice_RAB_default*) indicating which voice channel type will be allocated by default;
**characterised in that** the element further comprises:
a processor for analyzing the value of the first configurable network parameter
(*Voice_RAB_default*); and, depending upon the value of the first configurable network parameter, comparing a selected one of the node parameters with a corresponding one
of the other configurable network parameters, said corresponding other configurable network parameter being a threshold value; wherein the element allocates voice calls to a given voice channel type in accordance with the result of this comparison.

9. The element of claim 8, wherein the plurality of node parameters are selected from a group including at least:
• Node B HSPA baseband use (*NB_HSPA_BB*)
• Node B DCH baseband use (*NB_DCH_BB*)
• Node B transmission power use (*TX_power*)
• Node B code tree use (*Code_Tree*)

10. The element of claim 8 or 9, wherein the other configurable network parameters are selected from a group including at least:
• HSPA Baseband Congestion Threshold (HSPA_BB_{CT}) parameter, to indicate from what level of HSPA baseband use the Node B is in congestion state;
• DCH Baseband Congestion Threshold (DCH_BB_{CT}) parameter, to indicate from what level of DCH baseband use the Node B is in congestion state;
• TX Power Congestion Threshold (TX_POWER_{CT}) parameter, to indicate from what level of transmission power the Node B is in congestion state;
• Codes Congestion Threshold (CODES_{CT}) parameter, to indicate from what level of tree codes usage the Node B is in congestion state.

## Patentansprüche

1. Verfahren zur Sprachkanaltyp-Zuweisung in einem UTRAN-Netzwerk mit einer Funknetzsteuerung (3) und mehreren Knoten B (2) unter der Steuerung der genannten Funknetzsteuerung (3), wobei das Verfahren Folgendes beinhaltet:
Empfangen, an der Funknetzsteuerung (3), für jeden der Knoten B (2):
- mehrere Knotenparameter, die einer Betriebsmittelnutzung an jedem jeweiligen Knoten B entsprechen, und
- mehrere konfigurierbare Netzwerkparameter, wobei ein erster der genannten konfigurierbaren Netzwerkparameter (*Voice_RAB_default*) anzeigt, welcher Sprachkanaltyp vorgabemäßig zugewiesen wird;
**dadurch gekennzeichnet dass** das Verfahren an der Funknetzsteuerung (3) Folgendes beinhaltet:
- Analysieren des Wertes des konfigurierbaren Netzwerkparameters (*Voice_RAB_default*);
- Vergleichen, je nach dem Wert des konfigurierbaren Netzwerkparameters, eines gewählten einen der Knotenparameter mit einem entsprechenden einen der anderen konfigurierbaren Netzwerkparameter, wobei der genannte entsprechende andere konfigurierbare Netzwerkparameter eine Engpassschwelle ist; und
- Zuweisen von Sprachanrufen zum Sprachkanaltyp je nach dem Ergebnis des Vergleichsschrittes.

2. Verfahren nach Anspruch 1, wobei die mehreren Knotenparameter ausgewählt werden aus einer Gruppe wenigstens bestehend aus:
• Knoten B HSPA-Basisbandnutzung (*NB_HSPA_BB*)
• Knoten B DCH-Basisbandnutzung (*NB_DCH_BB*)
• Knoten B Sendeleistungsnutzung (*TX_power*)
• Knoten B Code-Baum-Nutzung (*Code_Tree*)

3. Verfahren nach Anspruch 1 oder 2, wobei die anderen konfigurierbaren Netzwerkparameter ausgewählt sind aus einer Gruppe, die wenigstens Folgendes beinhaltet:
• HSPA-Basisband-Engpassschwellenparameter (HSPA_BB_{CT}) zum Anzeigen, ab welchem HSPA-Basisbandnutzungsniveau der Knoten B im Engpasszustand ist;
• DCH-Basisband-Engpassschwellenparameter (DCH_BB_{CT}) zum Anzeigen, ab welchem DCH-Basisbandnutzungsniveau der Knoten B im Engpasszustand ist;
• TX-Leistungsengpassschwellenparameter (TX_POWER_{CT}) zum Anzeigen, ab welchem Sendeleistungsniveau der Knoten B im Engpasszustand ist;
• Codes-Engpassschwellenparameter (CODES_{CT}) zum Anzeigen, ab welchem Baum-Code-Nutzungsniveau der Knoten B im Engpasszustand ist.

4. Verfahren nach einem der Ansprüche 1 bis 3, wobei der Wert des ersten konfigurierbaren Netzwerkparameters (Voice_RAB default) dem Wert entspricht, der für die Zuweisung von Sprachkanaltyp CS RAB über HSPA festgelegt ist,
wobei die Knotenparameter Knoten B HSPA-Basisbandnutzung (NB_HSPA_BB) beinhalten, wobei die konfigurierbaren Netzwerkparameter HSPA-Basisband-Engpassschwellenparameter *(HSPA_BB_{CT})* beinhalten,
wobei der Vergleichsschritt das Analysieren beinhaltet, ob die Knoten B HSPA-Basisbandnutzung *(NB_HSPA_BB)* höher ist als der HSPA-Basisband-Engpassschwellenparameter *(HSPA_BB_{CT}),* und
wobei der Zuweisungsschritt das Zuweisen von CS über DCH-Sprache nur dann beinhaltet, wenn die Knoten B HSPA-Basisbandnutzung (*NB_HSPA_BB*) als höher festgestellt wird als der HSPA-Basisband-Engpassschwellenparameter (*HSPA_BB_{CT}*).

5. Verfahren nach einem der Ansprüche 1 bis 3, wobei der Wert des ersten konfigurierbaren Netzwerkparameters (Voice_RAB_default) dem Wert entspricht, der für die Zuweisung von Sprachkanaltyp CS über DCH festgelegt ist,
wobei die Knotenparameter wenigstens eines der folgenden beinhalten: Knoten B DCH-Basisbandnutzung (NB_DCH_BB); Knoten B Sendeleistungsnutzung (TX_power); und Knoten B Code-Baum-Nutzung (Code_Tree),
wobei die konfigurierbaren Netzwerkparameter wenigstens eines der Folgenden beinhalten: DCH-Basisband-Engpassschwellenparameter (DCH_BB*_{CT}*), TX-Leistungsengpassschwellenparameter (TX_POWER*_{CT}*) und Codes-Engpassschwellenparameter (CODES*_{CT}*), wobei jeder Netzwerkparameter einem jeweiligen Knotenparameter entspricht,
wobei der Vergleichsschritt das Analysieren beinhaltet, ob wenigstens einer der Knotenparameter (TX_Power, Code_Tree, NB_DCH_BB) höher ist als der entsprechende konfigurierbare Netzwerkparameter (TX_POWER*_{CT}*, CODES*_{CT}*, DCH_BB*_{CT}*), und
wobei der Zuweisungsschritt das Zuweisen von CS über HSPA-Sprache nur dann beinhaltet, wenn wenigstens einer der Knotenparameter (TX_Power, Code_Tree, NB_DCH_BB) als höher als der entsprechende konfigurierbare Netzwerkparameter (TX_POWER*_{CT}*, CODES*_{CT}*, DCH_BB*_{CT}*) festgestellt wird.

6. Verfahren nach einem der vorherigen Ansprüche, **dadurch gekennzeichnet, dass** das Verfahren beim Rufaufbau angewendet wird.

7. Verfahren nach einem der vorherigen Ansprüche, **dadurch gekennzeichnet**, das das Verfahren in einem Umkonfigurationsprozess während des Rufs angewandt wird.

8. Funknetzsteuerelement für eine Sprachkanaltyp-Zuweisung in einem UTRAN-Netzwerk mit einer Funknetzsteuerung (3) und mehreren Knoten B (2) unter der Steuerung der genannten Funknetzsteuerung (3), wobei das Element Folgendes umfasst:
einen Empfänger, um von jedem der Knoten B (2) Signale zu empfangen, die Folgendes anzeigen:
- mehrere Knotenparameter, die der Betriebsmittelnutzung an jedem jeweiligen Knoten B entsprechen, und
- mehrere konfigurierbare Netzwerkparameter, wobei ein erster der genannten konfigurierbaren Netzwerkparameter (*Voice_RAB_default*) anzeigt, welcher Sprachkanaltyp vorgabemäßig zugewiesen wird;
**dadurch gekennzeichnet, dass** das Element ferner Folgendes umfasst:
einen Prozessor zum Analysieren des Wertes des ersten konfigurierbaren Netzwerkparameters (*Voice_RAB_default*); und Vergleichen, je nach dem Wert des ersten konfigurierbaren Netzwerkparameters, eines gewählten einen der Knotenparameter mit einem entsprechenden einen der anderen konfigurierbaren Netzwerkparameter, wobei der genannte entsprechende andere konfigurierbare Netzwerkparameter ein Schwellenwert ist; wobei das Element Sprachanrufe zu einem gegebenen Sprachkanaltyp je nach dem Ergebnis dieses Vergleichs zuweist.

9. Element nach Anspruch 8, wobei die mehreren Knotenparameter ausgewählt sind aus einer Gruppe, die wenigstens Folgendes beinhaltet:
• Knoten B HSPA-Basisbandnutzung (*NB_HSPA_BB*)
• Knoten B DCH-Basisbandnutzung (*NB_DCH_BB*)
• Knoten B Sendeleistungsnutzung (*TX_power*)
• Knoten B Code-Baum-Nutzung (*Code_ Tree*).

10. Element nach Anspruch 8 oder 9, wobei die anderen konfigurierbaren Netzwerkparameter ausgewählt sind aus einer Gruppe, die wenigstens Folgendes beinhaltet:
• HSPA-Basisband-Engpassschwellenparameter (HSPA_BB_{CT}) zum Anzeigen, ab welchem HSPA-Basisbandnutzungsniveau der Knoten B im Engpasszustand ist;
• DCH-Basisband-Engpassschwellenparameter (DCH_BB_{CT}) zum Anzeigen, ab welchem DCH-Basisbandnutzungsniveau der Knoten B im Engpasszustand ist;
• TX-Leistungsengpassschwellenparameter (TX_POWER_{CT}) zum Anzeigen, ab welchem Sendeleistungsniveau der Knoten B im Engpasszustand ist;
• Codes-Engpassschwellenparameter (CODES_{CT}) zum Anzeigen, ab welchem Baum-Code-Nutzungsniveau der Knoten B im Engpasszustand ist.

## Revendications

1. Procédé pour l'affectation d'un type de canal vocal dans un réseau UTRAN possédant un contrôleur de réseau radio (3) et une pluralité de noeuds B (2) lesquels se trouvent sous le pilotage dudit contrôleur de réseau radio (3), le procédé comprenant les opérations consistant à :
à recevoir, au niveau du contrôleur de réseau radio (3), pour chacun des noeuds B (2)
- une pluralité de paramètres de noeud correspondant à l'utilisation des ressources au niveau de chaque noeud B respectif, et
- une pluralité de paramètres de réseau configurables, un premier desdits paramètres de réseau configurables (*Voice_RAB_default*) indiquant quel type de canal vocal sera affecté par défaut ;
**caractérisé en ce que** le procédé comprend, au niveau du contrôleur de réseau radio (3), les opérations consistant à :
- analyser la valeur du premier paramètre de réseau configurable (*Voice_RAB_default*) ;
- en fonction de la valeur du premier paramètre de réseau configurable, comparer un paramètre sélectionné parmi les paramètres de noeud avec un paramètre correspondant parmi les autres paramètres de réseau configurables, ledit autre paramètre de réseau configurable correspondant étant un seuil d'encombrement; et
- affecter des appels vocaux à un type de canal vocal conformément au résultat de l'étape de comparaison.

2. Procédé selon la revendication 1, la pluralité des paramètres de noeud étant sélectionnée parmi un groupe comprenant au moins :
• l'utilisation de la bande de base HSPA, noeud B (*NB_HSPA_BB*)
• l'utilisation de la bande de base DCH, noeud B (*NB_DCH_BB*)
• l'utilisation de la puissance de transmission, noeud B (*TX_power*)
• l'utilisation de l'arborescence des codes, noeud B (*Code_ Tree*)

3. Procédé selon la revendication 1 ou 2, les autres paramètres de réseau configurables étant sélectionnés parmi un groupe comprenant au moins :
• le paramètre de seuil d'encombrement de bande de base HSPA (HSPA_BB_{CT}) pour indiquer à partir de quel niveau d'utilisation de la bande de base HSPA le noeud B se trouve en état d'encombrement;
• le paramètre de seuil d'encombrement de bande de base DCH (DCH_BB_{CT}) pour indiquer à partir de quel niveau d'utilisation de la bande de base DCH le noeud B se trouve en état d'encombrement;
• le paramètre de seuil d'encombrement de puissance TX (TX_POWER_{CT}) pour indiquer à partir de quel niveau de la puissance de transmission le noeud B se trouve en état d'encombrement ;
• le paramètre de seuil d'encombrement de codes (CODES_{CT}) pour indiquer à partir de quel niveau d'utilisation des codes d'arborescence le noeud B se trouve en état d'encombrement.

4. Procédé selon l'une quelconque des revendications 1 à 3, la valeur du premier paramètre de réseau configurable (Voice_RAB_default) correspondant à la valeur établie pour affecter le type de canal vocal CS RAB sur HSPA,
les paramètres de noeud englobant l'utilisation de la bande de base HSPA du noeud B (NB_HSPA_BB),
les paramètres de réseau configurables englobant le paramètre de seuil d'encombrement de bande de base HSPA (*HSPA_BB_{CT}*),
l'étape de comparaison comprenant l'analyse pour savoir si l'utilisation de la bande de base HSPA du noeud B (*NB_HSPA_BB*) est plus élevée, ou non, que le paramètre de seuil d'encombrement de bande de base HSPA (*HSPA_BB_{CT}*), et
l'étape d'affectation comprenant l'affectation du mode vocal CS sur DCH uniquement lorsqu'il a été déterminé que l'utilisation de la bande de base HSPA du noeud B (*NB_HSPA_BB*) est plus élevée que le paramètre de seuil d'encombrement de bande de base HSPA (*HSPA_BB_{CT}*).

5. Procédé selon l'une quelconque des revendications 1 à 3, la valeur du premier paramètre de réseau configurable (Voice_RAB_default) correspondant à la valeur établie pour affecter le type de canal vocal CS sur DCH,
les paramètres de noeud englobant au moins l'un des éléments suivants : utilisation de la bande de base DCH du noeud B (NB_DCH_BB) ; utilisation de la puissance de transmission du noeud B (TX_power) ; et utilisation de l'arborescence des codes du noeud B (Code_Tree),
les paramètres de réseau configurables englobant au moins l'un des éléments suivants : paramètre de seuil d'encombrement de la bande de base DCH (DCH_BB*_{CT}*), paramètre de seuil d'encombrement de la puissance TX (TX_POWER*_{CT}*), et paramètre de seuil d'encombrement des codes (CODES*_{CT}*), chaque paramètre de réseau correspondant à un paramètre de noeud respectif,
l'étape de comparaison comprenant l'analyse pour savoir si l'un au moins des paramètres de noeud (TX_Power, Code_Tree, NB_DCH_BB) est plus élevé que le paramètre de réseau configurable correspondant (TX_POWER*_{CT}*, CODES*_{CT}*, DCH_BB*_{CT}*), et
l'étape d'affectation comprenant l'affectation du mode vocal CS sur HSPA uniquement lorsqu'il a été déterminé que l'un au moins des paramètres de noeud (TX_Power, Code_Tree, NB_DCH_BB) est plus élevé que le paramètre de réseau configurable correspondant (TX_POWER*_{CT}*, CODES*_{CT}*, DCH_BB*_{CT}*).

6. Procédé selon l'une quelconque des revendications précédentes, **caractérisé en ce que** le procédé est appliqué lors de l'établissement de l'appel.

7. Procédé selon l'une quelconque des revendications précédentes, **caractérisé en ce que** le procédé est appliqué dans le cadre d'un processus de reconfiguration pendant l'appel.

8. Élément de contrôleur de réseau radio pour l'affectation d'un type de canal vocal dans un réseau UTRAN possédant un contrôleur de réseau radio (3) et une pluralité de noeuds B (2) lesquels se trouvent sous le pilotage dudit contrôleur de réseau radio (3), l'élément comprenant :
un récepteur pour recevoir, de la part de chacun des noeuds B (2), des signaux indiquant :
- une pluralité de paramètres de noeud correspondant à l'utilisation des ressources au niveau de chaque noeud B respectif, et
- une pluralité de paramètres de réseau configurables, un premier desdits paramètres de réseau configurables *(Voice_RAB_default)* indiquant quel type de canal vocal sera affecté par défaut ;
**caractérisé en ce que** l'élément comprend en outre :
un processeur pour analyser la valeur du premier paramètre de réseau configurable (*Voice_RAB_default*) ; et, en fonction de la valeur du premier paramètre de réseau configurable, comparer un paramètre sélectionné parmi les paramètres de noeud avec un paramètre correspondant parmi les autres paramètres de réseau configurables, ledit autre paramètre de réseau configurable correspondant étant une valeur de seuil ; cas dans lequel l'élément affecte les appels vocaux à un type de canal vocal donné conformément au résultat de cette comparaison.

9. Élément selon la revendication 8, la pluralité des paramètres de noeud étant sélectionnée parmi un groupe comprenant au moins :
• l'utilisation de la bande de base HSPA, noeud B (*NB_HSPA_BB*)
• l'utilisation de la bande de base DCH, noeud B (*NB_DCH_BB*)
• l'utilisation de la puissance de transmission, noeud B (*TX_power*)
• l'utilisation de l'arborescence des codes, noeud B (*Code_Tree*)

10. Élément selon la revendication 8 ou 9, les autres paramètres de réseau configurables étant sélectionnés parmi un groupe comprenant au moins :
• le paramètre de seuil d'encombrement de bande de base HSPA (HSPA_BB_{CT}) pour indiquer à partir de quel niveau d'utilisation de la bande de base HSPA le noeud B se trouve en état d'encombrement;
• le paramètre de seuil d'encombrement de bande de base DCH (DCH_BB_{CT}) pour indiquer à partir de quel niveau d'utilisation de la bande de base DCH le noeud B se trouve en état d'encombrement;
• le paramètre de seuil d'encombrement de puissance TX (TX_POWER_{CT}) pour indiquer à partir de quel niveau de la puissance de transmission le noeud B se trouve en état d'encombrement ;
• le paramètre de seuil d'encombrement de codes (CODES_{CT}) pour indiquer à partir de quel niveau d'utilisation des codes d'arborescence le noeud B se trouve en état d'encombrement.
